# EUROPEAN PATENT SPECIFICATION

(11) **EP 1 290 394 B1**
(45) Date of publication and mention of the grant of the patent: **16.03.2011**
(21) Application number: 01984554.4
(22) Date of filing: 17.04.2001
(51) Int. Cl.: F28F 21/08, F28D 1/03, B23K 1/00

(54) **HEAT EXCHANGER AND TUBE THEREFOR**
WÄRMETAUSCHER UND ROHR DAFÜR
ECHANGEUR THERMIQUE ET TUBE ASSOCIE

(30) Priority: 14.04.2000 GB 0009197
(43) Date of publication of application: 12.03.2003
(73) Proprietor: Llanelli Radiators Limited, Llanelli,Carmarthenshire SA14 8HU (GB)
(72) Inventor: JACKSON, Adrian, Swansea SA3 5TT (GB); EVANS, Huw, Edgar, Llanelli, Carmarthenshire SA14 8HU (GB)
(74) Representative: Davies, Gregory Mark
(86) International application number: PCT/GB2001/001759
(87) International publication number: WO 2002/018862

(56) References cited:
- EP-A- 0 302 232
- FR-A- 2 765 817
- US-A- 6 000 461

## Description

The present invention relates to a heat exchanger and a tube therefor; in particular to a heat exchanger and heat exchange tube for vehicular use.

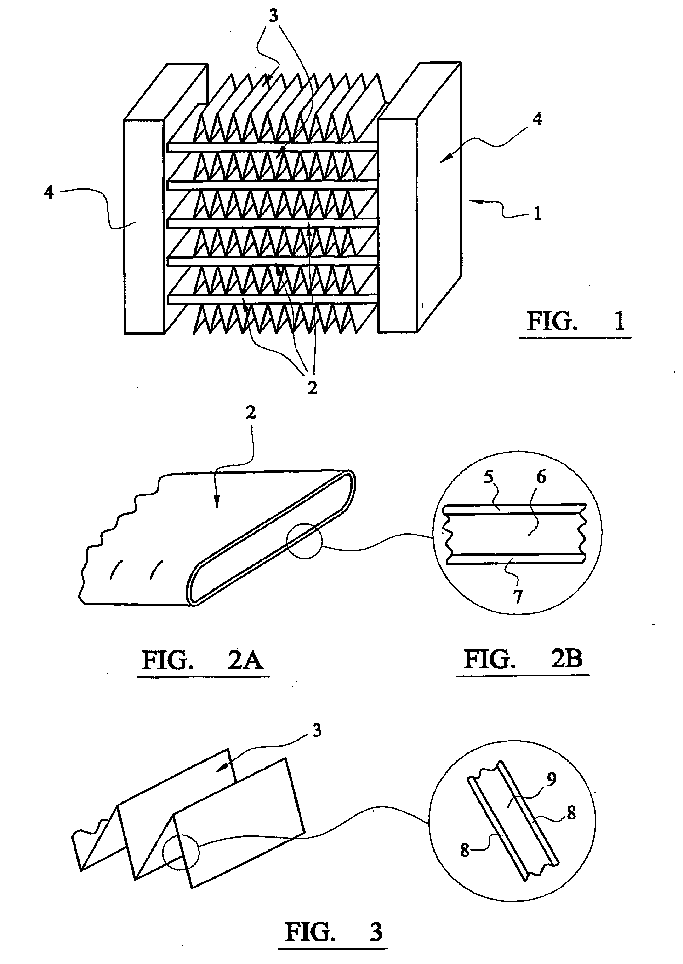

The use of aluminium alloys, and combinations of aluminium alloys, is widespread throughout the automotive heat exchanger industry. Figure 1 illustrates the generalized construction of a prior art aluminium heat exchanger (1), where tube sections (2) are interspersed between airway sections (3), and constrained between section(s) (4) forming the collector tanks. Within the collector tanks (4) are located fluid entry and exit ports to facilitate the flow of that fluid requiring heat exchange within the unit. From these tanks, the tube sections (2) allow flow of fluid across the heat exchanger face area. Air is induced to flow across this face area, via the airway sections, and consequently exchange heat with the fluid in the tubes, thereby cooling the fluid within the tubes.

Such heat exchanger assemblies are conventionally 'brazed' together, such that a lower melting point aluminium alloy (e.g. an Al-Si alloy) is used to form solid joints between parts 2, 3 and 4. To facilitate this joining process, the lower melting point alloy is typically provided as a cladding layer on the outer surfaces of the airway (3), the outer surface(s) of the tubes (2), and/or the outer surface(s) of the collector sections (4). Such a tube construction, using layers of lower melting point alloy (7) is illustrated in Figures 2A and 2B. The majority of the tube is constructed of the 'core alloy' (6), being an aluminium alloy chosen upon the basis of strength, density, cost and corrosion resistance. This core alloy can be clad upon either side by the same, or different alloys (5) and (7). Within some embodiments, the internal cladding alloy (5) is deliberately designed to be more electronegative with respect to the core alloy (6), and thereby inhibit corrosive attack from propagating into the core alloy.

The outer cladding (7) is conventionally chosen as an aluminium-silicon based alloy to facilitate brazing. In some instances, both internal and external claddings are chosen to be aluminium-silicon based to aid brazing, especially when internal tube joints are required. In an analogous fashion, when the collector tank assemblies are made using aluminium, a common alloy selection to those used in the tubes is chosen. Thus alloys used to construct collector tank assemblies are either singly or doubly clad, with at least one of those claddings being aluminium-silicon based. Figure 3 illustrates the airway construction. Again, a core alloy(9) is chosen, typically for strength, cost and to offer cathodic protection to the tube core alloy (6). Under certain circumstances, an aluminium-silicon based cladding is utilized on the outer surfaces of the airway (8), to facilitate brazing.

During the brazing operation, the lower melting point aluminium-silicon based cladding is induced to flow across the surfaces of the core alloys, aided by controlled atmospheric conditions and the possible application of a flux. This is achieved by holding the heat exchanger assembly at a temperature above the melting point of the aluminium-silicon alloy, but below that of the core alloy. Thus the molten aluminium-silicon alloy pools within the joint regions of the heat exchanger, and when cooled, solidifies, thereby bonding the heat exchanger components together. This brazing mechanism has an associated disadvantage intrinsic to the flow of a molten aluminium-silicon alloy across a solid aluminium substrate. The substrate, in this instance the 'core alloy', will inevitably contain discontinuities within its metallurgical structure, such as crystal grain boundaries, atomic stacking fault defects and chemical segregation. Such defects can induce the diffusion of silicon from the molten alloy into their locality, and consequently erode the core alloy in these local areas.

Thus, after solidification is complete, the core alloy surface will exhibit evidence of localized penetration by the aluminium-silicon alloy. This localized penetration into the core is a disadvantage if that region of the heat exchanger surface is subject to cyclic stress during operational use. This region, because of its intrinsically different mechanical characteristics/behaviour, can act as a site of stress concentration and induce cracking, which consequently compromises the integrity of the heat exchanger. Such cyclic stress might be induced by either thermal or mechanical means.

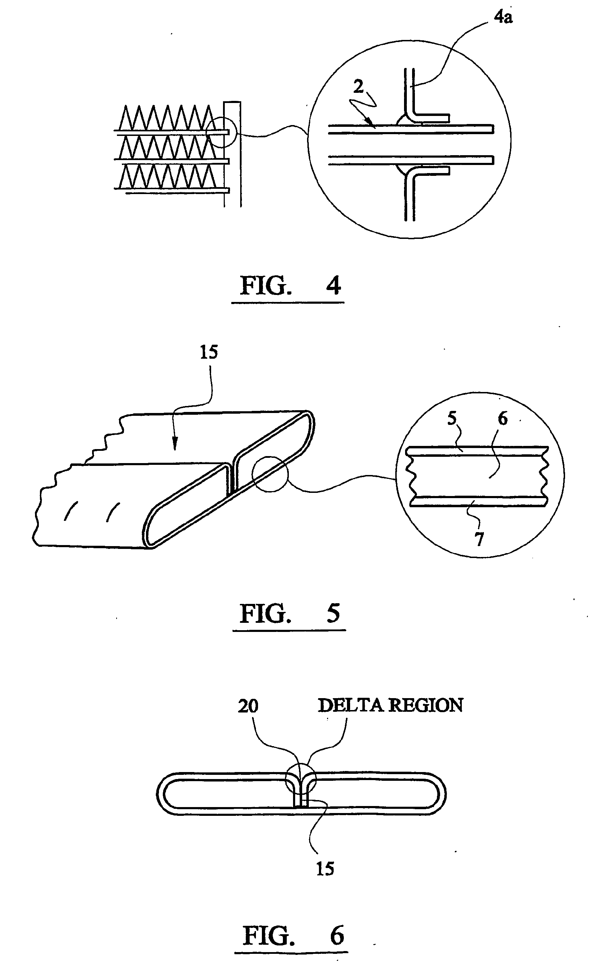

Certain heat exchanger assemblies incorporate tube designs with strengthening features to facilitate use within higher pressure systems. One such design, designated a 'B-Type Tube', is illustrated in Figure 5. The central partition or seam 15 forms two discrete tube sections after brazing, which allows the tube to withstand much greater internal pressure. The alloy selection however has conventionally remained consistent to that for the generalized tube of Figure 2. Designs such as the B-Type Tube incorporate an outer cladding (7) of an aluminium-silicon based alloy to facilitate brazing. The resultant stress concentrators developed after brazing, by the mechanism previously described, can have severe limitations upon the integrity of such tubes during cyclic stress. The outer cladding of aluminium-silicon alloy also has an additional, associated disadvantage during the brazing process, especially when used in conjunction with a core alloy with increased magnesium content (for strength increase). Within the B-Type Tube design, the 'delta hole' region 20 is illustrated in Figure 6. Collector tanks 4 typically include a so-called tube plate 4a provided with substantially rectangular slots (with radiussed corners) to snugly receive the relevant end of the respective tube 2 (see Figure 4). The delta region 20 forms an aperture or hole between the slot of the tube plate 4a and the surface of the tube due to the presence of the seam 15. This delta region must be filled with pools of clad alloy prior to solidification, if a fluid-tight seal is to' be affected between the tube and the collector tank. By placing a melting clad layer on the outside of the B-Type Tube, this exacerbates the problem by increasing the delta size when the cladding becomes molten and flows. To overcome this effect, increased capillary action from the molten clad is required to fill this greater hole. This problem becomes increasingly difficult when higher strength core alloys, containing increased magnesium concentrations, are used in B-Type Tube construction. It is well known in the art that magnesium readily forms oxides during inert gas brazing, and such oxides have very high melting points. The presence of such oxides within the molten flux and molten clad alloy decreases fluidity, and consequently capillary flow. To avoid this problem, conventional B-Type core alloys have maintained magnesium levels below 0.05% by weight. A heat exchange tube according to the preamble of claim 1 is known from FR-A-2765817.

This invention describes a particular cladding choice for heat exchanger tubes, designed to minimize potential disadvantages and limitations.

It has surprisingly been found that a reversal of the prior art situation in which the lower melting point aluminium-silicon cladding layer is not present on the exterior of the tube provides adequate brazing to the airway fins where aluminium-silicon clad airway fins are used. The performance characteristics of such tubes have been found to be improved also. Furthermore, and more surprisingly B-type tubes have been found to braze adequately where the aluminium-silicon cladding is present on the interior rather than the exterior of the tube core material; the ability of the cladding material to be present on the interior rather than the exterior has again been found to improve the performance of the tube and consequently, heat exchanger performance.

The principle underlying the invention is believed to have wider applications than in relation to aluminium-silicon clad cores.

According to a first aspect, the invention provides a heat exchange tube according to claim 1.

The dependent claims relate to preferred embodiments of the heat exchange tube according to claim 1.

Typically prior to brazing the lower melting point material will be present on the internal boundary of the tube wall as a cladding covering the core. Following heat treatment, the cladding melts and a proportion will ingress into the core material and solidify.

The presence and degree of ingressing material is readily apparent upon microscopic examination of the tube.

The invention is particularly suited to tubes for aluminium brazing, particularly where the lower melting point material comprises an aluminium alloy particularly an aluminium-silicon alloy (typically aluminium-silicon hypoeutectic alloy).

The tube preferably has a core aluminium alloy desirably of high strength. For example core alloys containing strengthening elements such as Mg, Cu, Mn and/or other transition element additions. For example the tube could include a core aluminium alloy having magnesium substantially at or above 0.05%Mg.

The tube is preferably of folded, roll-form or welded construction comprising a strip or sheet formed to define a plurality of flow paths and an intermediate seam comprising material of the tube wall. The tube is beneficially constructed from a strip or sheet formed to define a plurality of flow-paths and a longitudinally running seam, the seam comprising material of the tube wall, the tube wall having an internal boundary layer or surface comprising or having one or more zones of a lower melting point material than the core wall material. The longitudinally running seam is preferably positioned intermediate and separating adjacently running flow-paths.

A vehicle heat exchanger including tubes according to the invention beneficially has a tube plate having an aperture through which the tubes extend, the tube plate having a layer or surface zone of material having a lower melting point than the core layer of the tube plate and tube.

A vehicle heat exchanger according to the invention preferably includes a heat dissipation fin arrangement contiguous with the outer wall of the tube, the fin arrangement including a layer or surface including zones of material having a lower melting point than the core material of the fin.

According to a further aspect, the invention provides a method of forming a heat exchange tube comprising the features of claim 11.

The invention may be better understood with reference to the accompanying drawings in which:
Figure 1 is a schematic perspective view of a heat exchanger;
Figure 2a and 2b are views of prior art heat exchanger tubes;
Figure 3 shows views of prior art fin/airway strips;
Figure 4 shows tube location in a tube plate;
Figure 5 shows a folded seamed heat exchange tube; and
Figure 6 is an end view of the tube of Figure 5 showing in particular the "delta" region.

A preferred design for a high-pressure heat exchanger is described herein. The tube (2) is of B-Type design (as shown in Figure 5) with the inner cladding (5) comprising an aluminium-silicon alloy to facilitate joining. A lower melting point alloy is avoided for the outer cladding (7), to minimize the formation of localised aluminium-silicon stress concentrators upon the outer surface of the final brazed tube. Indeed, the outer cladding (7) could beneficially employ an alloy choice to provide cathodic protection for the tube core (e.g. an aluminium-1%zinc alloy), or indeed an alloy choice with a reduced alloying element diffusivity, especially for silicon. It may be equally effective to eliminate the outer tube cladding (7) altogether, depending upon the choice of core alloy (6).

Such a tube construction does mean however that the airway (3) material requires an external cladding (8) of aluminium-silicon based composition, to facilitate airway-to-tube bonding. Also, the aluminium sections forming part or all of the collector tank assemblies (4) will require external aluminium-silicon based claddings, again to facilitate bonding in those tube-to-tank regions.

By providing the lower melting point aluminium-silicon alloy (AA4343) cladding on the inner surface of the tube wall the increase in the delta hole 20 that would occur in the prior art tubes on melting of the external cladding of the tube (2) is avoided. The internal cladding layer upon melting during brazing flows by capillary action into the seam 15 and provides a sufficiently robust and sealed joint. The ingress of the molten material into the core metal is on the interior of the tube (rather than the exterior) and the stress concentrators so formed are less of a problem because the inside of the tube is in compression (not tension) during pressure cycling.

A further benefit of a cladding arrangement that incorporates an outer cladding that is not aluminium-silicon based is the ability to use higher levels (>0.05%wt.) of magnesium in the core alloy. Consider the alloy AA7072, for example, employed as an outer cladding, in conjunction with a core alloy of >0.05%Mg, and an inner cladding of AA4343. The presence of a solid, AA7072 surface in the delta region can inhibit the creation of magnesium oxides within the flux in this region, by simply acting as a barrier between the magnesium in the core and the flux in the delta region. Fluidity in this region can thus be improved.

Two heat exchangers have been constructed, with identical collector tank and airway configurations. These heat exchangers differ in their orientation of the B-Type Tube material claddings. Heat Exchanger A utilizes an inner cladding of alloy AA7072, a core alloy of AA3003, and an outer cladding of AA4343. In Heat Exchanger B these claddings are reversed (i.e. an outer cladding of AA7072 and an inner cladding of AA4343, upon a core alloy of AA3003) .

Heat exchanger A fails pressure pulsation below 90,000 cycles. Heat exchanger B with braze clad on the interior of the tube enabled a sound brazed join to be achieved and passed pressure pulsation to 180,000 cycles.

The outer surface of tube (2) is in tension due to bending from tubeplate movement and internal pressure and if there is a clean surface with minimal ingress of cladding alloy into the core then fatigue initiation is delayed. Having cladding alloy ingress into the core on the inner surface is not so detrimental as this region should be in compression on bending.

In practice there may be zones on the external surface of the brazed tube which exhibit ingress of cladding alloy into the core. This will however be present only in the supported zones where the tube surface contacts the airway (3) or the tube plate slots of the collector tank assemblies (4).

The loss of an inner corrosion clad is not an issue in a properly managed coolant system with correct longlife antifreeze and corrosion inhibitors.

## Claims

1. A heat exchange tube (2) having a tube wall including a core layer (6), an external boundary surface, and an internal boundary surface, the tube comprising a strip or sheet formed to define a plurality of flow paths and an intermediate seam (15) comprising material of the tube wall, wherein the tube wall has one or more zones of the internal boundary surface which includes material having a lower melting point than the core layer, either as a cladding boundary layer or as material ingressing into the core layer, **characterised in that** the tube wall external boundary surface includes corrosion protection material and/or cathodic protection material and/or a material having a melting point which is not lower than the melting point of the tube.

2. A heat exchange tube according to claim 1, for use in a brazed aluminium heat exchanger, wherein the heat exchange tube comprises at least a core aluminium alloy.

3. A heat exchange tube according to claim 1, wherein the lower melting point material comprises an aluminium alloy.

4. A heat exchange tube according to claim 1, wherein the lower melting alloy comprises an Aluminium-Silicon alloy.

5. A heat exchange tube according to any preceding claim comprising a core aluminium alloy having magnesium substantially at or above 0.05%Mg.

6. A heat exchange tube according to any preceding claim of folded or roll-form construction comprising a strip or sheet formed to define a plurality of flow paths and wherein the intermediate seam (15) comprising material of the tube wall is longitudinally running.

7. A heat exchange tube according to any preceding claim, wherein the longitudinally running seam (15) is positioned intermediate and separating adjacently running flow-path.

8. A vehicle heat exchanger including one or more heat exchange tubes according to any preceding claim.

9. A vehicle heat exchanger according to claim 8, comprising a tube plate having an aperture the tube extends, the tube plate having a layer or surface zone of material having a lower melting point than the core layer of the tube plate and tube.

10. A vehicle heat exchanger according to clam 8 or claim 9, comprising a heat dissipation fin arrangement contiguous with the outer wall of the tube, the fin arrangement including a layer or surface including zones of material having a lower melting point than the core material of the fin.

11. A method of forming a heat exchange tube comprising deforming strip or sheet material including:
a core layer (6);
a clad layer (5) of lower melting point material than the core layer material;
a surface layer (7) including corrosion protection material and/or cathodic protection material on the obverse side of the core layer (6) to the clad layer (5) of lower melting point material;
the deforming of the strip or sheet material being such as to form tube wall portions and a longitudinally running seam (15) defining respective flow-paths in side by side relationship, the tube wall portions having the clad layer (5) of lower melting point material on the internal, flow-path, side of the tube.

## Patentansprüche

1. Ein Wärmeaustausch-Rohr (2) mit einer Rohrwand beinhaltend eine Kernschicht (6), eine äußere Grenzfläche und eine innere Grenzfläche, wobei das Rohr einen Streifen oder eine Platte enthält, die geformt sind, um eine Vielzahl von Strömungswegen und eine Zwischenfuge (15) zu definieren, die Material der Rohrwand enthält, wobei die Rohrwand eine oder mehrere Zonen der inneren Grenzfläche aufweist, die Material mit einem niedrigeren Schmelzpunkt als die Kernschicht, entweder als Verkleidungsgrenzschicht oder als in die Kernschicht eindringendes Material beinhaltet, **dadurch gekennzeichnet, dass** die äußere Grenzfläche der Rohrwand ein Korrosionsschutz-Material und/oder kathodisches Schutzmaterial beinhaltet und / oder ein Material mit einem Schmelzpunkt aufweist, der nicht niedriger ist als der Schmelzpunkt des Rohrs.

2. Ein Wärmeaustausch-Rohr nach Anspruch 1, zur Verwendung in einem gelöteten Aluminiumwärmeaustauscher, in welchem das Wärmeaustausch-Rohr mindestens einen Aluminiumlegierungskern enthält.

3. Ein Wärmeaustausch-Rohr nach Anspruch 1, in welchem das Material mit dem niedrigeren Schmelzpunkt eine Aluminiumlegierung enthält.

4. Ein Wärmeaustausch-Rohr nach Anspruch 1, in welchem die niedriger schmelzende Legierung eine Aluminium-Silizium-Legierung enthält.

5. Ein Wärmeaustausch-Rohr nach einem der vorstehenden Ansprüche, enthaltend einen Aluminiumlegierungskern, der im Wesentlichen 0,05 % oder über 0,05 % Magnesium aufweist.

6. Ein Wärmeaustausch-Rohr nach einem der vorstehenden Ansprüche mit Aufbau in gefalteter oder gerollter Form, enthaltend einen Streifen oder eine Platte, die geformt sind, um eine Vielzahl von Strömungswegen zu definieren, und bei welchem die Zwischen-Fuge (15), die Material der Rohrwand enthält, longitudinal verläuft.

7. Ein Wärmeaustausch-Rohr nach einem der vorstehenden Ansprüche, in welchem die longitudinal verlaufende Fuge (15) zwischen und benachbart verlaufende Strömungswege trennend positioniert ist.

8. Ein Fahrzeugwärmeaustauscher enthaltend ein oder mehrere Wärmeaustausch-Rohre nach einem der vorstehenden Ansprüche.

9. Ein Fahrzeugwärmeaustauscher nach Anspruch 8, enthaltend eine Rohrplatte mit einer sich durch das Rohr erstreckenden Öffnung, wobei die Rohrplatte eine Schicht oder eine Oberflächenzone des Materials aufweist, das einen niedrigeren Schmelzpunkt als die Kernschicht der Rohrplatte und des Rohres aufweist.

10. Ein Fahrzeugwärmeaustauscher nach Anspruch 8 oder 9, enthaltend eine an der äußerten Wand des Rohres anschließend Wärmeabgabe-Lamellenanordnung, wobei die Lamellenanordnung eine Schicht oder eine Oberfläche beinhaltet, die Materialzonen beinhaltet, die einen niedrigeren Schmelzpunkt als das Kernmaterial der Lamelle aufweisen.

11. Ein Verfahren zum Ausbilden eines Wärmeaustausch-Rohres enthaltend Verformen von Streifen- oder Plattenmaterial beinhaltend:
eine Kernschicht (6):
eine Verkleidungsschicht (5) aus Material mit niedrigerem Schmelzpunkt als das Kernschichtmaterial;
eine Oberflächenschicht (7) beinhaltend Korrosionsschutz-Material und/oder kathodisches Schutzmaterial auf der Vorderseite der Kernschicht (6) bis zur Verkleidungsschicht (5) aus einem Material mit niedrigem Schmelzpunkt;
Verformen des Streifen- oder Plattenmaterials, um die Rohrwandabschnitte und eine longitudinal verlaufende Fuge (15) auszubilden, die jeweils nebeneinander geordnete Strömungswege definieren, wobei die Rohrwandabschnitte an der inneren strömungswegseitigen Seite des Rohres die Verkleidungsschicht (5) aus einem Material mit niedrigerem Schmelzpunkt aufweisen.

## Revendications

1. Tube d'échange de chaleur (2) ayant une paroi de tube comprenant une couche de noyau (6), une surface de délimitation externe et une surface de délimitation interne, le tube comprenant une bande ou feuille formée afin de définir une pluralité de trajectoires d'écoulement et un joint intermédiaire (15) comprenant le matériau de la paroi de tube, dans lequel la paroi de tube a une ou plusieurs zones de la surface de délimitation interne qui comprend le matériau ayant un point de fusion inférieur à la couche de noyau, en tant que couche de délimitation de placage ou en tant que matériau pénétrant dans la couche de noyau, **caractérisé en ce que** la surface de délimitation externe de la paroi de tube comprend un matériau de protection contre la corrosion et/ou un matériau de protection cathodique et/ou un matériau ayant un point de fusion qui n'est pas inférieur au point de fusion du tube.

2. Tube d'échange de chaleur selon la revendication 1, destiné à être utilisé dans un échangeur de chaleur en aluminium brasé, dans lequel le tube d'échange de chaleur comprend au moins un alliage d'aluminium pour le noyau.

3. Tube d'échange de chaleur selon la revendication 1, dans lequel le matériau à point de fusion bas comprend un alliage d'aluminium.

4. Tube d'échange de chaleur selon la revendication 1, dans lequel l'alliage à point de fusion bas comprend un alliage d' aluminium - silicium.

5. Tube d'échange de chaleur selon l'une quelconque des revendications précédentes, comprenant un alliage d'aluminium de noyau ayant une teneur en magnésium sensiblement de ou supérieure à 0,05%Mg.

6. Tube d'échange de chaleur selon l'une quelconque des revendications précédentes de construction pliée ou en forme de rouleau comprenant une bande ou une feuille formée afin de définir une pluralité de trajectoires d'écoulement et dans lequel le joint intermédiaire (15) comprenant le matériau de la paroi de tube s'étend de manière longitudinale.

7. Tube d'échange de chaleur selon l'une quelconque des revendications précédentes, dans lequel le joint (15) s'étendant de manière longitudinale est positionné entre et séparant la trajectoire d'écoulement s'étendant de manière adjacente.

8. Echangeur de chaleur pour véhicule comprenant un ou plusieurs tubes d'échange de chaleur selon l'une quelconque des revendications précédentes.

9. Echangeur de chaleur pour véhicule selon la revendication 8, comprenant une plaque de tube ayant une ouverture dans laquelle le tube s'étend, la plaque de tube ayant une couche ou zone de surface de matériau ayant un point de fusion inférieur à la couche de noyau de la plaque de tube et du tube.

10. Echangeur de chaleur pour véhicule selon la revendication 8 ou la revendication 9, comprenant un agencement d'ailette de dissipation de chaleur contigu avec la paroi externe du tube, l'agencement d'ailette comprenant une couche ou surface comprenant des zones de matériau ayant un point de fusion inférieur au matériau de noyau de l'ailette.

11. Procédé pour former un tube d'échange de chaleur comprenant l'étape consistant à déformer le matériau de bande ou de feuille comprenant :
une couche de noyau (6) ;
une couche de placage (5) réalisée avec un matériau ayant un point de fusion inférieur au matériau de la couche de noyau ;
une couche de surface (7) comprenant un matériau de protection contre la corrosion et/ou un matériau de protection cathodique sur le côté opposé de la couche de noyau (6), vers la couche de placage (5) du matériau à point de fusion bas ;
la déformation du matériau de bande ou de feuille qui est prévu pour former les parties de paroi de tube et un joint s'étendant de manière longitudinale (15) définissant des trajectoires d'écoulement respectives selon une relation côte à côte, les parties de paroi de tube ayant une couche de placage (5) réalisée avec un matériau à point de fusion bas sur le côté de trajectoire d'écoulement interne du tube.
